# EUROPEAN PATENT APPLICATION

(11) **EP 2 927 846 A1**
(43) Date of publication of application: **07.10.2015**
(21) Application number: 15161708.1
(22) Date of filing: 30.03.2015
(51) Int. Cl.: G06Q 10/00

(54) **Synchronized story-centric media distribution**

(30) Priority: 03.04.2014 US 201461974490 P; 06.05.2014 US 201414270417
(71) Applicant: Avid Technology, Inc., Burlington, MA 01803 (US)
(72) Inventor: Gianattasio, Richard, Wellesley, MA Massachusetts 02482 (US); Thorp, Sean P., Watertown, MA Massachusetts 02472 (US); Hale, Michael, North Andover, MA Massachusetts 01845 (US)
(74) Representative: Cole, Douglas Lloyd

(57) **Abstract**

Social media messages associated with a news story item are scheduled to be published at a time relative to an expected air time of the news story in a news rundown. When the time to air of the news story item is changed, the time for publishing the social media message is changed automatically according to the updated news rundown, maintaining the relative timing. This helps news organizations manage the timing of social media messages that are related to broadcast stories, without the need to monitor a changing rundown. When social media messages published in advance of a news item broadcast engender high interest, newsroom producers may react by promoting the news item within the rundown and publishing additional teaser messages. Conversely, low reaction levels may lead to the demotion of a story, or even its elimination from the rundown.

## Description

### BACKGROUND

Traditionally, news content was distributed in printed publications such as newspapers and magazines, or by linear television broadcasting. As media of all kinds, and news content in particular, is increasingly consumed in non-traditional ways, such as via the Internet, news organizations need to diversify the ways in which they reach their audiences.

Furthermore, the Internet offers a variety of consumption modes, each with its own special media requirements. Media organizations need tools to help them reach audiences distributed across the various modes, and to adapt their content to each of the modes.

### SUMMARY

In general, the methods, systems, and computer program products described herein enable a social media message to be published automatically at a specified time interval before the airing of a news story, without the need for an editor to monitor subsequent changes in a news broadcast schedule.

In general, in one aspect, a method involves: on a newsroom computer system, selecting a news item from a plurality of news items to be broadcast, wherein a user of the newsroom computer system is able to edit a temporal sequence for broadcasting the plurality of news items after the news item has been selected; creating a social media message associated with the selected news item, wherein the association is implemented by including a unique identifier of the selected news story item as metadata packaged with the social media message; scheduling when the social media message is to be published in terms of a specified time relative to a scheduled broadcast time of the selected news item, the scheduled broadcast time of the selected news item being determined by a current temporal sequence of the plurality of news items in the newsroom computer system; and if the selected news item is still among a plurality of news items to be broadcast, automatically publishing the social media message at the specified time.

Various embodiments include one or more of the following features. The selected news item is removed from the plurality of news items before the social media message is published and the social message is not published. The temporal sequence of the plurality of news items is altered, and the social media message is published at the specified time relative to a location of the selected news item in the altered temporal sequence. Social media platform analytics are used to determine a level of interest in the selected news item before the selected news item is broadcast. If the level of interest is determined to be high, a supplemental social media message associated with the specified news item is created and scheduled to be published by specifying a time relative to a scheduled broadcast time of the selected news item, the scheduled broadcast time of the selected news item being determined by a current temporal sequence of the plurality of news items in the newsroom computer system. If the selected news item is still among a plurality of news items to be broadcast, the supplemental social media message is automatically published at the specified time. A producer can also advance the selected news item within the temporal sequence for broadcasting the plurality of news items if the level of interest is determined to be high, or, if the level of interest is determined to be low, move the selected news item to a later time within the temporal sequence for broadcasting the plurality of news items, or remove the selected news item entirely from the rundown sequence. The time interval between the selected news item and the social media distribution is at least one of: less than about five minutes; five to thirty minutes, and over thirty minutes.

In general, in another aspect, a method involves: on a newsroom computer system, selecting a news story item from a plurality of news story items to be broadcast, wherein a user of the newsroom computer system is able to edit a temporal sequence for broadcasting the plurality of news story items after the news story item has been selected; creating a social media message associated with the selected news story item, wherein the association is implemented by including a unique identifier of the selected news story item as metadata packaged with the social media message; scheduling when the social media message is to be published in terms of a specified time after a scheduled broadcast time of the selected news item, the scheduled broadcast time of the selected news item being determined by a current temporal sequence of the plurality of news items in the newsroom computer system; and automatically publishing the social media message at the specified time.

### BRIEF DESCRIPTION OF THE DRAWINGS

Figure 1 is a high level flow diagram illustrating the steps involved when a social media message associated with a broadcast story item is created and automatically published.
Figure 2 is a diagrammatic illustration of a user interface for creating a companion social media message to be published at a user-specified time interval in relation to a news story distributed through traditional media.

### DETAILED DESCRIPTION

As social media become increasingly adopted across the world as a communication medium for news, journalists need to harness such media or risk losing their audiences. To address this need, journalists seek to integrate social media platforms with the traditional broadcast process. However, owing to the dynamic nature of breaking news, the timing and order of news story broadcasts tends to be highly volatile, with their priority depending on other developing stories, as well as a host of other time-sensitive factors. As a result, news rundowns may be modified right up to, and even during the broadcast. This presents some special challenges when linking on-air news distribution with social media communication and requires the journalist to stay with the story throughout its lifecycle.

The methods described herein enable a journalist to create social media stories and link them directly to a parent story in a news rundown, without the need to track subsequent changes made to the broadcasting schedule, and how these might impact when or even whether a news story is aired. The direct connection permits social media to be distributed automatically by scheduling the release of the message at a specified time relative to the timing of the parent story in the broadcaster's newsroom computer system (NRCS). For example, in the case of a social message serving as a teaser to drive traffic to the parent story, an optimal time to distribute the message would be about five minutes prior to the airing of the story. As the position and hence the time-to-air of the parent story is adjusted within the NRCS run-down, the scheduled distribution of the associated social media content moves accordingly, maintaining its timing in relation to the updated air time of the parent story. Thus if the parent story is advanced to an earlier time, the automatic re-timing of the social message ensures that the message is sent out prior to the new air time, and not after the story has aired when it has become obsolete. Similarly, if the parent story is bumped to a later time, the corresponding social message teaser is also delayed to a time when it can still have maximum impact on recipients. In the case where the parent story is eliminated entirely from the on-air distribution, the accompanying social media message will also be cancelled automatically.

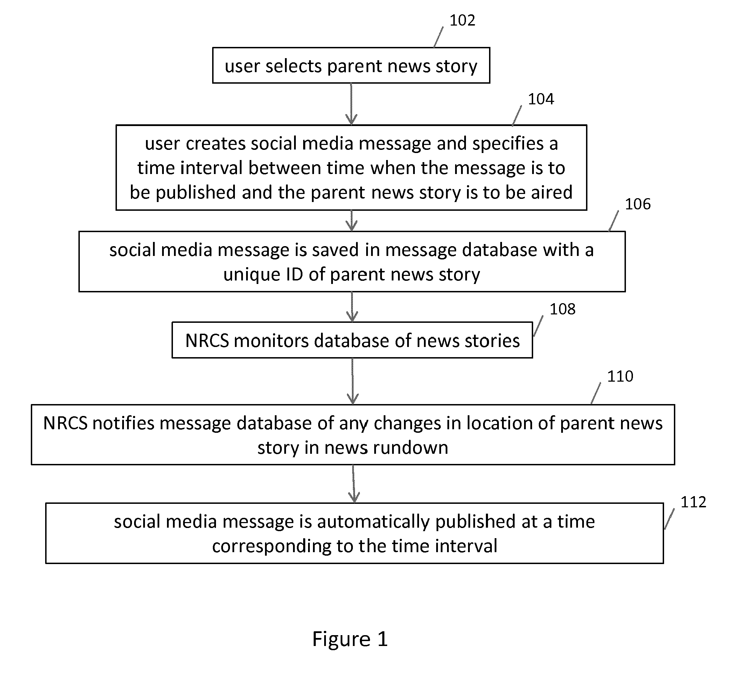

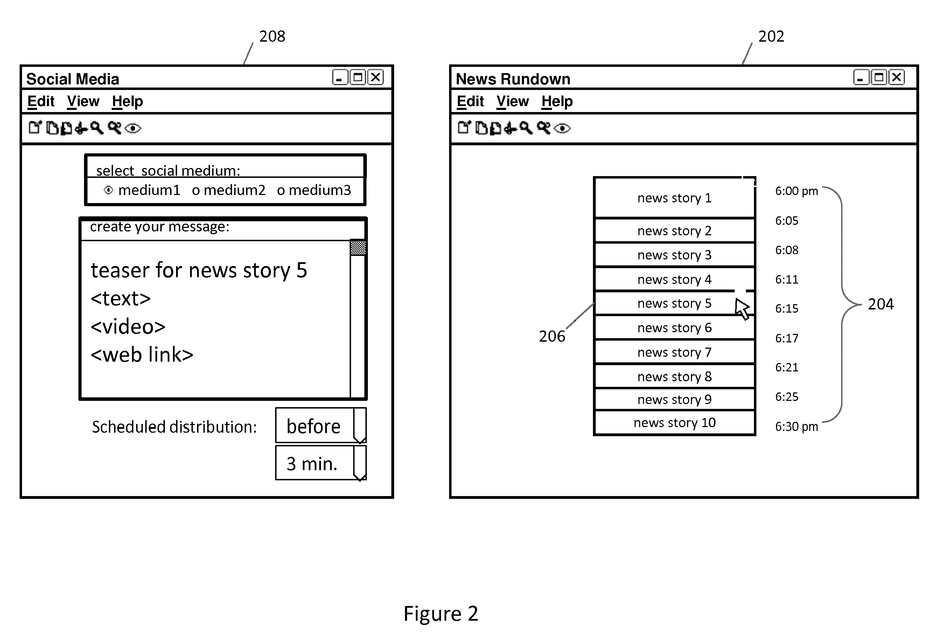

Figure 1 shows a high level flow diagram of the steps involved in creating and publishing a social media message associated with a news story. A diagrammatic user interface for implementing the process appears in Figure 2. The user selects the parent news story for which a companion social media message is required (step 102). Such a selection may be performed from within a news rundown window (202) of a NRCS, which shows a series of story items 204 arranged in sequential order for airing from top to bottom. A user selects the story item 206 that is to be linked to the generation a companion social media message. A social media message creation pane 208 opens to permit the user to specify the social medium to be used, whether the message includes one or more of text, video, and links to web content, and timing of the message to be generated (step 104). The user also enters text content of the message directly in the message creation pane. The window may open automatically when the parent news story item is selected. The social media message creation application receives information identifying the news story to which it is tied. The information may include a unique story ID of the news story item. The ID is included as metadata within a package containing the social media message. Another user interface enables the user to drag the news story contents into the creation pane, which then automatically pre-populates the messages with information, such as the name of the news story, and provides the unique story ID which is added to the social message object in the background. Scheduling of the social message delivery is determined in relation to the NRCS rundown. The specified time is may be under five minutes, or lie within the 5-30 minute range, or be greater than 30 minutes. In some settings, for example where the occurrence of certain events is known in advance, the specified time might be hours or even days in advance. When the user has finished specifying the social media message, the message is saved in a database that is linked to the NRCS via a service bus (step 106), and is scheduled for distribution using web methods. The parent story is then marked in the NRCS rundown so that the producer is aware that the story is linked to a social media distribution event.

After the social media message is saved and scheduled, the NRCS monitors its database of news stories (step 108). If it detects a change in the parent news story location in the rundown, or any change in schedule affecting the story, a bus message is sent to the social media message database to update the schedule in the one or more database objects that contain the message to update its distribution schedule accordingly (step 110). If the news story is cancelled from the rundown, the schedule in the social media object is changed, e.g., to have a null value, so that it is never distributed.

If the news story is still scheduled for airing at a time corresponding to the specified time interval before the news item is to be aired, the social media message is then published at the specified time (step 112). For example, if the time interval for the message is set to 3 minutes before air time, and the news story is scheduled to air at 6:25PM as part of a six o'clock news program, the social media message is published at 6:22PM, assuming that at that time the parent story still remains in the rundown for airing at 6:25PM. The distribution of follow up messages may also be scheduled at specified time interval after a news item has been broadcast.

If the rescheduling of the news story causes any conflicts with the timing of the related social media distribution the NRCS system may provide the news producer with a warning. For example, if the producer attempts to delete a story in the rundown after the social message has been sent out, a warning to this effect may be given.

The distribution of a social media message provides an opportunity to obtain advance feedback on the likely impact of its associated news story. Messages that engender high interest will be forwarded, redistributed, or stimulate active discussion and more messages. By using realtime social media analytics tied to the various social media platforms deployed, an advance indication of the likely level of interest in a story can be obtained. Rules may be set up that automatically notify a news producer according to the measured social media metrics, which may include recommending a change in the parent story priority within the news rundown. The rules may include determining a level of interest in a story based on measured social media activity, and recommending various actions to the news editor in response to the findings. For example, if a level of interest exceeds a certain threshold, the producer may decide to expand the associated news story, and/or to move it to an earlier position in the rundown. A supplemental social message may also be distributed to arouse further interest, and, if applicable, to notify the audience of the updated air time. On the other hand, if the distributed social media message engenders a low level of activity, the producer may demote the associated story in the rundown sequence, or even cancel it altogether. Levels of interest may be categorized in terms of ranges, such as low, medium, and high, with each range being delimited by a predetermined activity level. Other ways of gauging the likely reaction of the potential audience includes speed of reaction to the distributed message, the amount of text associated with the activity, and the number of times a given message is forwarded or re-published.

The social media analytics results may also be used to determine the type and number of follow-up social media messages to be distributed after the news item has aired. If reaction levels have been high, an extensive series of follow up messages may be scheduled, and links or advance notice of other related stories may be included.

An example of a newsroom system (NRCS) that may be tied directly to social media messaging is iNews® from Avid® Technology, Inc., of Burlington, Massachusetts. Newsroom systems are described in U.S. Patent Nos. 6,038,573, 6,141,007, and 7,836,389, and include rundown windows for displaying and editing the sequence of news stories to appear in a news program being prepared for broadcast. An example of a social media publishing application to which the NRCS is tied for the generation of the social media messages is Interplay Pulse, also from Avid Technology, Inc. The social media used for publishing the message may include Twitter®, Facebook®, and Google+®. The NRCS and one or more social media publishing applications may be connected to a message bus over which metadata and messages may be sent and workflows orchestrated.

The various components of the system described herein may be implemented as a computer program using a general-purpose computer system. Such a computer system typically includes a main unit connected to both an output device that displays information to a user and an input device that receives input from a user. The main unit generally includes a processor connected to a memory system via an interconnection mechanism. The input device and output device also are connected to the processor and memory system via the interconnection mechanism.

One or more output devices may be connected to the computer system. Example output devices include, but are not limited to, liquid crystal displays (LCD), plasma displays, various stereoscopic displays including displays requiring viewer glasses and glasses-free displays, cathode ray tubes, video projection systems and other video output devices, printers, devices for communicating over a low or high bandwidth network, including network interface devices, cable modems, and storage devices such as disk or tape. One or more input devices may be connected to the computer system. Example input devices include, but are not limited to, a keyboard, keypad, track ball, mouse, pen and tablet, touchscreen, camera, communication device, and data input devices. The invention is not limited to the particular input or output devices used in combination with the computer system or to those described herein.

The computer system may be a general purpose computer system, which is programmable using a computer programming language, a scripting language or even assembly language. The computer system may also be specially programmed, special purpose hardware. In a general-purpose computer system, the processor is typically a commercially available processor. The general-purpose computer also typically has an operating system, which controls the execution of other computer programs and provides scheduling, debugging, input/output control, accounting, compilation, storage assignment, data management and memory management, and communication control and related services. The computer system may be connected to a local network and/or to a wide area network, such as the Internet. The connected network may transfer to and from the computer system program instructions for execution on the computer, media data such as video data, still image data, or audio data, metadata, review and approval information for a media composition, media annotations, and other data.

A memory system typically includes a computer readable medium. The medium may be volatile or nonvolatile, writeable or nonwriteable, and/or rewriteable or not rewriteable. A memory system typically stores data in binary form. Such data may define an application program to be executed by the microprocessor, or information stored on the disk to be processed by the application program. The invention is not limited to a particular memory system. Time-based media may be stored on and input from magnetic, optical, or solid state drives, which may include an array of local or network attached disks.

A system such as described herein may be implemented in software, hardware, firmware, or a combination of the three. The various elements of the system, either individually or in combination may be implemented as one or more computer program products in which computer program instructions are stored on a computer readable medium for execution by a computer, or transferred to a computer system via a connected local area or wide area network. Various steps of a process may be performed by a computer executing such computer program instructions. The computer system may be a multiprocessor computer system or may include multiple computers connected over a computer network. The components described herein may be separate modules of a computer program, or may be separate computer programs, which may be operable on separate computers. The data produced by these components may be stored in a memory system or transmitted between computer systems by means of various communication media such as carrier signals.

In embodiments of the disclosed invention, social media messages associated with a news story item are scheduled to be published at a time relative to an expected air time of the news story in a news rundown. When the time to air of the news story item is changed, the time for publishing the social media message is changed automatically according to the updated news rundown, maintaining the relative timing. This helps news organizations manage the timing of social media messages that are related to broadcast stories, without the need to monitor a changing rundown. When social media messages published in advance of a news item broadcast engender high interest, newsroom producers may react by promoting the news item within the rundown and publishing additional teaser messages. Conversely, low reaction levels may lead to the demotion of a story, or even its elimination from the rundown.

Having now described an example embodiment, it should be apparent to those skilled in the art that the foregoing is merely illustrative and not limiting, having been presented by way of example only. Numerous modifications and other embodiments are within the scope of one of ordinary skill in the art and are contemplated as falling within the scope of the invention.

## Claims

1. A method comprising:
on a newsroom computer system, selecting a news item from a plurality of news items to be broadcast, wherein a user of the newsroom computer system is able to edit a temporal sequence for broadcasting the plurality of news items after the news item has been selected;
creating a social media message associated with the selected news item, wherein the association is implemented by including a unique identifier of the selected news story item as metadata packaged with the social media message;
scheduling when the social media message is to be published in terms of a specified time relative to a scheduled broadcast time of the selected news item, the scheduled broadcast time of the selected news item being determined by a current temporal sequence of the plurality of news items in the newsroom computer system; and
if the selected news item is still among a plurality of news items to be broadcast, automatically publishing the social media message at the specified time.

2. The method of claim 1, wherein the selected news item is removed from the plurality of news items before the social media message is published and the social message is not published.

3. The method of claim 1 or 2, wherein the temporal sequence of the plurality of news items is altered, and the social media message is published at the specified time relative to a location of the selected news item in the altered temporal sequence.

4. The method of any of the preceding claims, further comprising using social media platform analytics to determine a level of interest in the selected news item before the selected news item is broadcast.

5. The method of claim 4, further comprising:
if the level of interest is determined to be high:
creating a supplemental social media message associated with the specified news item;
scheduling when the supplemental social media message is to be published by specifying a time relative to a scheduled broadcast time of the selected news item, the scheduled broadcast time of the selected news item being determined by a current temporal sequence of the plurality of news items in the newsroom computer system; and
if the selected news item is still among a plurality of news items to be broadcast, automatically publishing the supplemental social media message at the specified time.

6. The method of claim 4 or 5, further comprising:
if the level of interest is determined to be high, advancing the selected news item within the temporal sequence for broadcasting the plurality of news items; and
if the level of interest is determined to be low, moving the selected news item to a later time within the temporal sequence for broadcasting the plurality of news items.

7. The method of claim 4 or 5, further comprising:
if the level of interest is determined to be low, removing the selected news item from the temporal sequence for broadcasting the plurality of news items.

8. The method of any of the preceding claims, wherein the specified time is less than about five minutes.

9. The method of any of claims 1 to 7, wherein the specified time is in the range of five minutes to thirty minutes.

10. The method of any of claims 1 to 7, wherein the specified time is greater than thirty minutes.

11. A method comprising:
on a newsroom computer system, selecting a news story item from a plurality of news story items to be broadcast, wherein a user of the newsroom computer system is able to edit a temporal sequence for broadcasting the plurality of news story items after the news story item has been selected;
creating a social media message associated with the selected news story item, wherein the association is implemented by including a unique identifier of the selected news story item as metadata packaged with the social media message;
scheduling when the social media message is to be published in terms of a specified time after a scheduled broadcast time of the selected news item, the scheduled broadcast time of the selected news item being determined by a current temporal sequence of the plurality of news items in the newsroom computer system; and
automatically publishing the social media message at the specified time.

12. A computer program product comprising software code adapted, when executed on a data processing apparatus, to perform a method as set out in any of the preceding claims.

13. A computer system having means for performing a method as set out in any of claims 1 to 11.
